# EUROPEAN PATENT SPECIFICATION

(11) **EP 3 775 593 B1**
(45) Date of publication and mention of the grant of the patent: **27.11.2024**
(21) Application number: 19716827.1
(22) Date of filing: 29.03.2019
(51) Int. Cl.: F16D 23/06, F16D 23/02

(54) **SPACE OPTIMIZED SYNCHRONIZER DESIGN**
PLATZOPTIMIERTER SYNCHRONISIERERENTWURF
CONCEPTION DE SYNCHRONISEUR OPTIMISÉE DANS L'ESPACE

(30) Priority: 29.03.2018 DE 102018107684
(43) Date of publication of application: 17.02.2021
(73) Proprietor: Oerlikon Friction Systems (Germany) GmbH, 28719 Bremen (DE)
(72) Inventor: SPRECKELS, Marcus, 28719 Bremen (DE); BISSEX, Robert, Nantyffyllon, Maesteg CF34 0HG (GB)
(74) Representative: Misselhorn, Hein-Martin
(86) International application number: PCT/EP2019/058060
(87) International publication number: WO 2019/185896

(56) References cited:
- DE-A1- 102017 112 287
- DE-A1- 102017 112 287
- DE-B- 1 049 168
- DE-B- 1 049 168
- FR-A- 1 466 939
- FR-A- 1 466 939

## Description

The invention concerns a blocking type synchronizer according to the preamble of claim 1, and a transmission equipped with at least one such blocking type synchronizer according to the preamble of claim 8.

### TECHNICAL BACKGROUND

Blocking type synchronizers, sometime also called "Borg- Warner-type" synchronizers have been known for decades.

From the beginning it was an important aspect to design the synchronizers that way that they are as space saving as possible.

The need to optimize these synchronizers has already increased in the past two decades since the number of forward gears in demand has steadily increased.

In the recent past the demand for such space-optimized synchronizers has dramatically increased. The reason for this is that the preferred technology to fulfill future emission requirements are electric vehicles, especially hybrid electric vehicles.

Hybrid powertrains need special transmissions to combine the power of the combustion engine and the electrical motor. This could be a conventional dual clutch or even an automated manual transmission upgraded with an electrical motor or special transmissions for hybrid powertrains.

The majority of these transmissions still use synchronizer systems for the gear changes that are mandatory for an economical operation of the combustion engine.

An important requirement to blocking type synchronizer systems for hybrid transmissions is a compact design. A compact design especially in axial direction is mandatory because additional components like the electrical engine have to be integrated into the existing space of a conventional powertrain.

Prior published EP 1 992 831 discloses a blocking type synchronizer having a synchronizer portion with a friction lining on the outer diameter and the cone forming the coupling for synchronization being positioned inside the gear wheel.

The blocker spline is inside the cone diameter on the small diameter side of the cone. Such a synchronizer arrangement is difficult to actuate and does not allow any axial space- savings.

Prior published DE 10 2010 034 420 discloses a blocking type synchronizer with reduced axial packaging by placing the friction surface partially below the docking teeth. The space saving potential is limited as index lugs are still present.

DE 10 49 168 B describes a synchronizing device for dog clutches, in which a synchronizing ring carrying ratchet teeth is brought into frictional contact with another clutch member when it is axially displaced on one clutch member, wherein one or more springs, which are uniformly distributed over the circumference and constantly act in the axial direction, are arranged, which keep the synchronizing ring influence in the sense of a solution of the frictional connection.

### SUMMARY OF THE INVENTION

The purpose of the invention is a design concept that allows an additional space-saving compared to prior art synchronizer systems.

The aforementioned object is solved by the subject-matter of independent claim 1. The dependent claims are directed to advantageous embodiments.

### ADVANTAGES OF THE INVENTION

The inventive blocking type synchronizer comprises a synchronizer hub equipped with an external toothing on which, by means of an according inner toothing, a synchronizer sleeve is hold non-rotatably but slidably in axial direction.

The synchronizer sleeve is the means for operating the synchronizer during ongoing shifting process by means of an engaging shifting fork - which may be manually operated - or by means of an autonomously operating shifting actuator. Said toothings do not need to be formed by teeth in a narrower sense. An embodiment as a number positively engaging form fit elements that can interact in the necessary way is sufficient.

The blocking type synchronizer comprises a synchronizer ring which can be brought into positive engagement with the synchronizer sleeve. Moreover, it comprises a dog ring which can be brought, as soon as rotating with the same speed as the synchronizer sleeve, into positive engagement with the synchronizer sleeve.

According to the invention, the synchronizer ring forms a synchronizer portion which embodies - due to the according shaping of its outer circumferential surface - a male cone surface serving as a (main) part of a coupling for frictionally accelerating the dog ring to synchronous speed.

Moreover, the synchronizer ring forms a blocker portion, too, with a blocker spline that cannot be passed by the teeth of the synchronizer sleeve before the dog ring and the synchronizer ring have reached fully or at least essentially synchronous speed.

According to the invention, at least the average diameter of said male cone surface of the synchronizer portion is smaller than the average diameter on which said blocker spline is arranged. Preferably, the diameter of said male cone surface is everywhere smaller than the diameter of said blocker spline, regardless whether the reference is the foot diameter or the head diameter of the blocker spline.

The innovative arrangement of the synchronizer portion allows a significant reduction of the axial length from dog ring to dog ring of a synchronizer system. The typical length of a conventional system is for example 39 mm; in such a case, the invention allows a reduction of the axial length to 32 mm or less. Independent protection is sought for a blocking type synchronizer with a synchronizer hub equipped with an external toothing on which, by means of an according inner toothing, a synchronizer sleeve is hold non- rotatably but slidably along the rotational axis, and a synchronizer ring which can be brought into positive engagement with the synchronizer sleeve, and a dog ring which can be brought, as soon as rotating with the same speed as the synchronizer sleeve, into positive engagement with the synchronizer sleeve, the synchronizer ring forms a synchronizer portion which embodies a male cone surface for frictionally accelerating the dog ring to synchronous speed, and that the synchronizer ring forms a blocker portion, too, with a blocker spline that cannot be passed by the teeth of the synchronizer sleeve before the dog ring and the synchronizer ring have reached the synchronous speed, wherein the average diameter of said male cone surface is smaller than the average diameter on which said blocker spline is arranged.

### OPTIONS FOR ADDITIONAL IMPROVEMETS

Options for additional improvements are figured out by the sub claims in the outline of what follows.

A preferred option is to design the blocking type synchronizer that way that said male cone surface of the synchronizer portion is located - seen in relation to the blocker spline - on the gear side instead of the hub side.

That fuels another inventive option, namely to position the major portion of the said male cone surface inside the dog ring. That allows a remarkable reduction of length, seen in axial direction.

Within the framework of another preferred improvement a friction ring is radially placed between the male cone surface of the synchronizer portion and the dog ring, whereas the friction ring is preferably equipped with one local slot. Another preferred embodiment provides that the inner circumferential surface of the friction ring forms a female cone surface which contacts directly the male taper surface of the synchronizer portion, whereas the outer circumferential surface of the friction ring preferably forms a male cone surface to frictionally interact directly with the dog ring.

If said female cone surface of the friction ring has a cone angle bigger than the cone angle of the male cone surface of the friction ring, then the unlocking of the synchronizer portion from the dog ring becomes easier.

In the framework of another preferred embodiment it is proposed to manufacture the synchronizer ring from a sheet metal which is shaped by means of plastic deformation. That way the forming of a male cone surface that is free of a surface pattern revealing a milling or grinding operation, is easily possible. That way the male cone has a superior surface quality that clearly reduces long time wear.

Preferably, the synchronizer ring is made from an annular and flat sheet metal provided with a blocker spline by stamping, and that is formed hereinafter into a ring with a first ring portion extending predominantly in radial direction, forming a blocker portion and carrying the blocker spline, and a second ring portion extending predominantly in axial direction and forming the synchronizer portion with said male cone surface. Such a manufacturing is highly efficient and allows remarkable cost saving.

### ADDITIONAL ASPECTS TO BE PROTECTED

Moreover, independent protection is sought for a transmission or gearbox (transmission with housing) with at least one blocking type synchronizer according the invention.

Finally, independent protection is sought for the use of a sheet metal for manufacturing a synchronizer ring of the blocking type synchronizer according to the invention by plastic transformation that embodies a blocking ring with a blocker spline cut into it and integrally therewith, a synchronizer portion with a male cone surface, wherein the average diameter of said male cone surface is smaller than the average diameter on which said blocker spline is arranged.

Additional technical effects, improvement options and advantages of the invention are disclosed by the following description of a preferred embodiment by means of the figures.

### LIST OF FIGURES

Figure 1 shows a cut through an inventive blocking type synchronizer embodied as a single cone type synchronizer.
Figure 2 shows the inventive synchronizer ring used by the construction according to Fig. 1 in greater detail.
Figure 3 shows the principle of a single cone type synchronizer.
Figure 4 shows the principle of a dual cone type synchronizer.
Figure 5 shows the principle of a triple cone type synchronizer.
Figure 6 shows the principle of a single cone synchronizer with a reduced cone angle.
Figure 7 shows the principle of another embodiment of a single cone synchronizer with a reduced cone angle.
Fig. 8 shows a construction essentially identical to the construction according to Figure 1, while the synchronizer itself is designed as a single cone synchronizer with a reduced cone angle.

### A PREFERRED EMBODIMENT

### DESCRIPTION OF THE INDIVIDUAL COMPONENTS

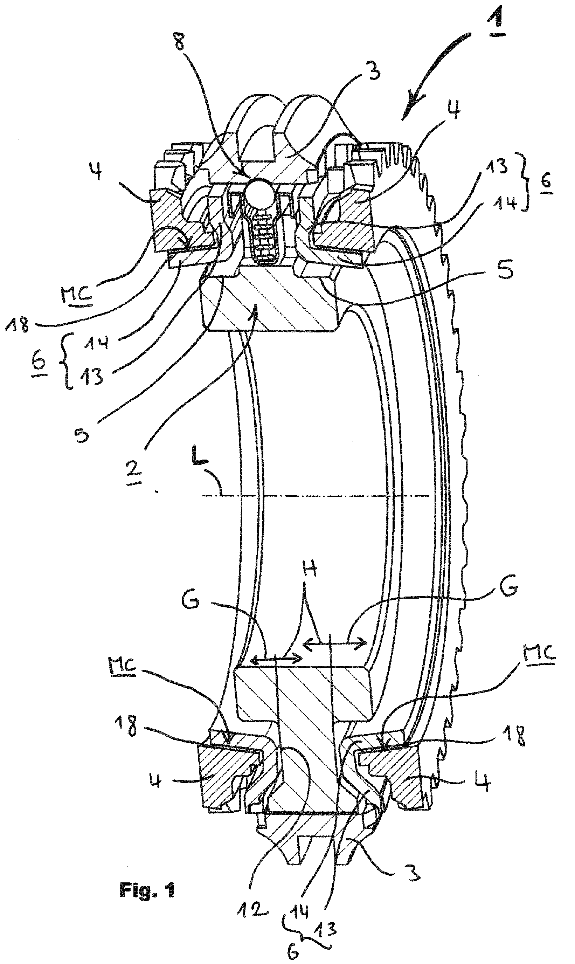

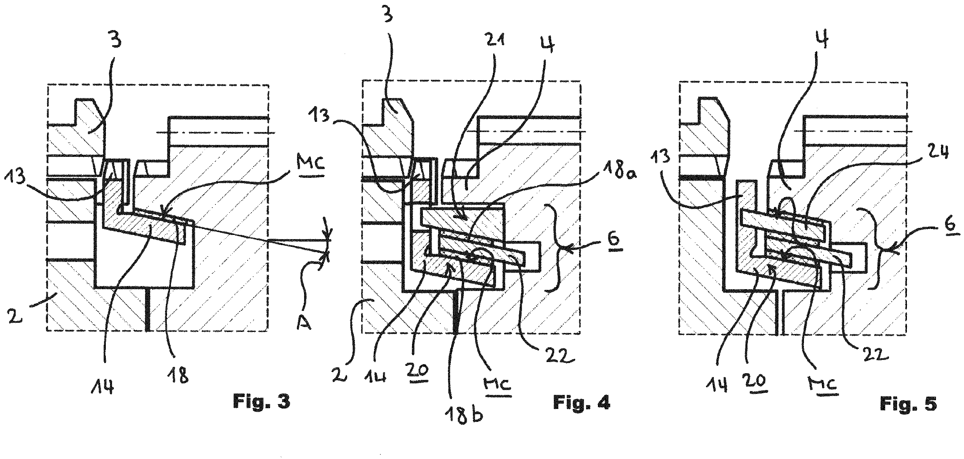

Fig. 1 shows an inventive blocking type synchronizer 1 in detail. This blocking type synchronizer makes use of the inventive variant that is shown and explained later on, too, by means of Fig. 3.

The centrally positioned synchronizer hub 2 is - by means of according shafts - in rotatable connection with the drive wheels of the vehicle. The rotational axis L mentioned hereinafter and depicted is defined by the shaft (not shown) carrying the synchronizer hub. The so-called gear side is marked with an arrow and a "G". The so-called hub side is marked with an arrow and an "H".

The synchronizer hub 2 is equipped with an external toothing.

The synchronizer hub 2 carries a synchronizer sleeve 3. The synchronizer sleeve 3 itself is equipped with an inner toothing. By means of the interaction of said toothings, the synchronizer sleeve 3 is hold in non-rotatable fashion on the synchronizer hub 2. That way the synchronizer sleeve 3 is forced to always rotate together with the synchronizer hub 2.

Upon according actuation by means of a shift fork (not depicted here), the synchronizer sleeve 3 is able to be urged to a sliding action back and forth in direction along the rotational axis L.

The respective dog ring 4 is mostly an integral part of a loose teethed wheel (not depicted) that can - when being coupled in - transmit the torque coming from the motor via the synchronizer 1 to the drive wheels of the vehicle.

The synchronizer hub 2 is equipped with means, here in the shape of radially incised shoulders 5, for bearing a synchronizer ring 6. Each of the synchronizer rings 6 is borne that way by the said shoulders 5 that it can slide back and forth along the synchronizer hub 2 in direction along the rotational axis L.

The synchronizer hub 2 has a number of recesses 7, in most cases three to six arranged in equidistant circumferential positions. What is meant by "recesses" becomes clear when comparing the upper and the lower part of Fig. 1. Each of the recesses 7 accommodates a form fit element, here in the shape of a strut 8 being boxed together with a spring 9 by a strut housing 10. The outer flank of the strut housing 10 can be pressed against the synchronizer ring 6.

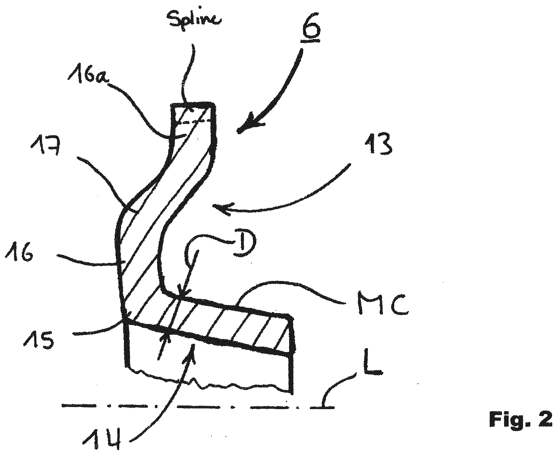

It is the synchronizer ring 6 that is of particular interest here. Figure 2 is dedicated to an embodiment of the synchronizer ring 6 as it can be used for the construction according to figure 1.

As can easily be seen, the synchronizer ring 6 has preferably a circular ring shape.

It has two ring portions that are rigidly interconnected to each other. For that purpose the synchronizer ring is in most cases one integrally formed part of metal, as explained in greater detail hereinafter.

The said first ring portion designated as blocker portion 13 is formed as a ring portion extending predominantly in radial direction. That condition is fulfilled in every case if the extension of this ring portion in radial direction (related to the axis L) is at least two times bigger than its extension in direction of the axis L. The blocker portion embodies the so-called blocker spline, which will be explained in greater detail later.

Describing the inventive blocker portion 13 in greater detail by reference to Fig. 2, one can say that it is designed (outside the areas where a strut and a strut housing is accommodated) preferably as follows:
Directly neighboring to the transition area 15 (the area between the blocker portion 13 and the synchronizer portion 14) the blocker portion is formed by an inner radial portion 16 that is oriented essentially in radial direction only. Hereinafter, seen in radial outward direction, the blocker portion is formed by an oblique portion 17. This oblique portion 17 is inclined away from the synchronizer hub in direction toward the dog ring 4. The oblique portion 17 is not negligible, since its radial extension mostly amounts to at least 30% of the radial extension of the complete blocker portion. Hereinafter, seen in radial outward direction again, the blocker portion 13 is formed by an outer radial portion 16a that is oriented essentially in radial direction only. This radial outer portion 16a of the blocker portion 13 normally embodies the blocker spline already mentioned. For sake of completeness it has to be said that in some cases the oblique portion could be replaced by a straight portion.

The said second ring portion designated as synchronizer portion 14 is formed as a ring portion extending predominantly in axial direction. That condition is fulfilled in every case if the extension of this ring portion in axial direction (parallel to the axis L) is at least 2.5 times bigger than its extension perpendicular to the direction of the axis L. The synchronizer portion 14 embodies the so-called male coupler cone MCC, which will be explained in greater detail later.

Fig. 1 makes visible what is clearly preferred individually or in total:
Seen in radial direction, the predominant or essentially the whole part of the blocker portion 13 can be positioned between the synchronizer hub 2 and the synchronizer sleeve 3, even if the synchronizer sleeve 3 is still in its neutral position, i.e. in a position where the preparatory phase of the synchronization ("die Vorsynchronisation") has not yet begun. For that purpose the synchronizer hub 2 can be equipped which an annular cutout 12 for accommodating the predominant portion or better at least 70% of the blocker portion.

Moreover, Fig. 1 makes visible that the male cone MC of the synchronizer portion 14 is located - seen in relation to the blocker spline - on the gear side G instead of the hub side H, the smallest diameter of the male cone MC takes, seen in direction of the axis L, a maximum distance to the synchronizer hub.

It can be seen that the synchronizer ring 6 as a whole partially embraces the dog ring 4 as follows: the male cone MC of the synchronizer portion 14 being part of the synchronizer ring 6 is positioned radially below the dog ring 4 and the blocker portion 13, or at least the blocker spline carried by it is positioned radially above the dog ring. That way the arrangement becomes very compact, too, that is leading to a remarkable space saving. The predominant portion of, or essentially the complete male cone surface of the synchronizer portion 14 extends essentially in direction of the rotational axis L and is positioned inside the dog ring 4, seen in radial direction.

As shown by Figure 1, the said design and arrangement (nesting) of a synchronizer ring and the dog ring assigned to it leads to a package whose extension in axial direction is not (essentially not) bigger than the overall extension of the synchronizer ring in axial direction.

As Figure 1 shows, the male cone surface of the synchronizer portion 14 will preferably not come into direct frictional contact with the surface of the dog ring 4 functionally assigned to it. Instead, a friction lining 18 is fit between said male cone surface MC and said surface of the dog ring. The friction lining 18 is preferably made of a carbon material.

### THE PREFERRED DESIGN OF THE SYNCHRONIZER RING AS A METAL SHEET PART

Finally, a hint to the preferred manufacturing of the synchronizer ring 6 has to be given.

It is clearly preferred to design the synchronizer ring 6 as a sheet metal part, which can be characterized in that it has everywhere the same thickness D, fully or essentially, see Fig. 2. The thickness D is measured in perpendicular direction to the local surface.

For sake of completion it has to be said that the advice of preferably making the synchronizer ring as a sheet metal that is plastically transformed does not exhaust in a mere manufacturing method in this particular case. An important optional point is that this kind of manufacturing method leads to a synchronizer portion with a male cone surface that is free of the macroscopic and microscopic milling and/or grinding traces, patterns or grooves which are inevitable in case of shaping the synchronizer portion by milling and/or grinding. That way (at least in a microscopic scale) an improved surface quality is awarded to the male cone surface that is - in terms of wear - more appropriate for the lasting sliding and frictional activities to be performed by the male cone surface.

Preferably, a sheet metal is used with a thickness (measured in direction perpendicular to the sheet metal main surface) between 1.5 mm and 3 mm. At first, a flat circular and annular disc is punched or stamped out. Preferably, it carries in the area of its outer circumference the blocker spline, which has already been cut out during punching or stamping.

In the next step, the flat circular and annular disc is plastically formed that way that its inner area forms a cone portion (synchronizer portion) extending essentially perpendicular to the plane that comprises the whole annular and circular ring before this plastic deformation operation. Preferably - already during the said forming process - the portion forming the blocker r is deformed that way that it embodies the above mentioned inner radial portion 16, the outer radial portion 16a and the interconnecting oblique portion 17.

Preferably - already during the forming process - the portion forming the blocker portion is deformed that way, too, that it locally embodies the areas for the accommodation of the struts 8 and the strut housings 10.

It is evident that a synchronizer ring made of a sheet metal can be manufactured with significantly increased effectivity compared to milling and grinding such a part as before.

### THE INTERACTION OF THE COMPONENTS FOR LOCKING AND SYNCHRONIZATION

The blocking type synchronization works as follows:
During ongoing shifting process, as soon as a synchronization is required, the synchronizer sleeve 3 will be slid by means of a shifting fork (not depicted) toward the dog ring 4 of the gear that is intended to be coupled.

In this phase, the strut 8 latches the strut housing 10 to the synchronizer sleeve 3 in a form fit manner, so that the strut housing 10 applies an axial force to the synchronizer ring and urges the synchronizer ring in direction towards the dog ring. The torque brings the blocker ring into blocking position.

The consequence thereof is that the male cone MC of the synchronizer ring 14, that is part of the synchronizer module 6, is driven into the female cone of the dog ring 4. This driving into the dog ring 4 is explained in greater detail at a later stage.

In result, the dog ring 4 is glidingly coupled to the rotating synchronizer ring 14. That way the dog ring 4 is accelerated.

Next, the struts 8 will disengage with the synchronizer sleeve 3, so that the pressure and torque exerted by the strut housing 10 to the blocker portion 13 of the synchronizer module 6 comes to an end.

Said pressure is replaced by the pressure of the teeth of the synchronizer sleeve 3, which are in contact with the according teeth or spline configuration of the blocker portion 13. In this phase, said teeth or spline configuration hinders the teeth of the synchronizer sleeve 3 from being moved into the area of the dog teeth carried by the dog ring 4. This phase is called "synchronization".

Due to this contact between the teeth of the synchronizer sleeve 3 and the teeth or spline configuration of the blocker portion 13, the acceleration of the dog ring 4 is finalized. As soon as the blocker portion 13 and the dog ring 4 rotate with the same or essentially the same rotational speed, the impact of the teeth of the synchronizer sleeve 3 is able to turn the blocker portion 13 in relation to the teeth of the synchronizer sleeve 3.

That way the blocker portion 13 gives way to the teeth of the synchronizer sleeve 3 to pass through the interspaces between the teeth or the spline configuration of the blocker portion 13, and to enter into the area of the dog teeth. Now the synchronization is completed.

That allows the teeth of the synchronizer sleeve 3 to engage into the interspaces between the dog teeth of the dog ring 4. Now the coupling is accomplished, since the dog ring 4 is rigidly fixed to the gear wheel being of interest here.

### POSSIBLE VARIANTS OF THE PREFERRED EMBODIMENT

Finally, the different possible variants of the inventive synchronizer ring 6 are systematically presented.

As the skilled person can easily imagine, each of the synchronizer types can be implemented into the preferred embodiment disclosed before.

### THE SINGLE CONE TYPE SYNCHRONIZER

For introduction into the systematics, figure 3 shows the single cone type synchronizer.

It is clearly visible here how the synchronizer ring 6 forms a blocker portion 13 and a synchronizer portion 14, as explained before. Again, the synchronizer portion 14 is coated with a friction lining 18 deposited or otherwise fixed on it.

It is clearly visible that the synchronizer portion 14 forms a male cone, as explained before. In this case, the male cone has a cone angle A of more than 6.5°. The reason for choosing such a value for the angle A or a bigger value for the angle A is to avoid a self-locking engagement of the male cone into the corresponding female cone of the dog ring 4. Such a self-locking engagement could occur in case the value of the cone angle A would be less than 6.5°.

Sometimes there is the need to increase the frictional forces that can be exerted from the synchronizer ring 6 to the dog ring 4. Doing so leads to quicker synchronization since the accelerating torque imposed to the dog ring 4 and the toothed wheel being connected to it is bigger.

### THE DUAL CONE TYPE SYNCHRONIZER

One solution for increasing the frictional forces is for example the dual cone type synchronizer as shown by figure 4.

This synchronizer uses a two-part synchronizer ring 6. The first part of the synchronizer ring 6 is a base ring 20 that embodies the blocker portion 13 and the synchronizer portion
14. The second part of the synchronizer ring is a support ring 21 which is mounted to the ring with a blocker portion 13 and the synchronizer portion 14 in a form-fit manner so that it is always urged to rotate with said base ring 20.

The base ring 20 embodies once again a synchronizer portion 14 with an outer circumference forming a male cone.

An intermediate ring 22 is fixed to the dog ring in a form-fit manner, so that it is always urged to rotate with the dog ring. The intermediate ring 22 forms a female cone along its inner circumference and a male cone, too, along its outer circumference. The intermediate ring carries an outer friction layer 18a deposited on it and an inner friction layer 18b, deposited on it, too.

As soon as the synchronizer ring 6 is pushed toward the dog ring, in right-hand direction here, the male cone formed by the synchronizer portion 14 is wedged into the female cone formed by the intermediate ring 22.

The consequence thereof is that the male cone formed by the outer circumference of the intermediate ring 22 is wedged into the female cone of the support ring 21. During the whole process the support ring 21 keeps its radial clearance toward the dog ring 4 so that there is no direct friction between the dog ring 4 and the support ring 21.

One can say that the synchronizer ring 6 of this embodiment carries two cones becoming frictionally effective, a male cone and a female cone.

In result, a double friction between the intermediate ring 22 and the synchronizer ring 6 is generated since the male cone of the synchronizer portion 14 presses against the female cone of the intermediate ring 22 while the female cone of the support ring 21 presses with essentially the same force against the male cone of the intermediate ring 22. The consequence is that a double torque is generated between the synchronizer ring 6 and the dog ring 4. That means the torque generated by this embodiment is approximately twice as high as the torque generated by the comparable single cone type.

That way it is possible to effect a quicker completion of the synchronization process.

### THE TRIPLE CONE TYPE SYNCHRONIZER

Another solution for increasing the frictional forces again is for example the triple cone type synchronizer as shown by figure 4.

This embodiment works comparable like the embodiment shown by and explained on the basis of figure 5.

The difference is the particular support ring 24 used here. This support ring 24 forms by means of its outer circumferential surface a second synchronizer portion with a second male cone.

As soon as the synchronizer ring 6 is pushed toward the dog ring 4, in right-hand direction here, the male cone formed by the synchronizer portion 14 is wedged into the female cone formed by the intermediate ring 22. That way the male cone formed on the outer circumference of the intermediate ring 22 is wedged against the female cone formed by the inner circumferential surface of the support ring.

Due to pushing of the synchronizer ring 6 towards the dog ring, the second synchronizer portion 26 is wedged into the female cone formed at the inner circumferential surface of the dog ring itself.

One can say that the synchronizer ring 6 of this embodiment carries three cones becoming frictionally effective, two male cones MC and a female cone.

That way frictional forces are generated by means of three surfaces in total. That means that the frictional forces available for accelerating the dog ring 4 are three times higher compared to the single cone type synchronizer explained in the beginning.

For sake of completeness it has to be mentioned that the teeth or form fit elements of the synchronizer ring 6 for engaging with the synchronizer sleeve 3 are not shown by Fig. 5. Nevertheless they are provided in reality, as shown by Fig. 3 and 4.

### SINGLE CONE TYPE SYNCHRONIZER WITH DECREASED CONE ANGLE AND TWO PART SYNCHRONIZER RING

Another variant for increasing the frictional forces that can be used for synchronization between the synchronizer ring 6 and the dog ring 4 is a single cone type synchronizer with a decreased cone angle B.

In order to make sure that the synchronizer ring 6 can be disengaged again from the dog ring 4, a special two-part synchronizer ring 6 can be used:

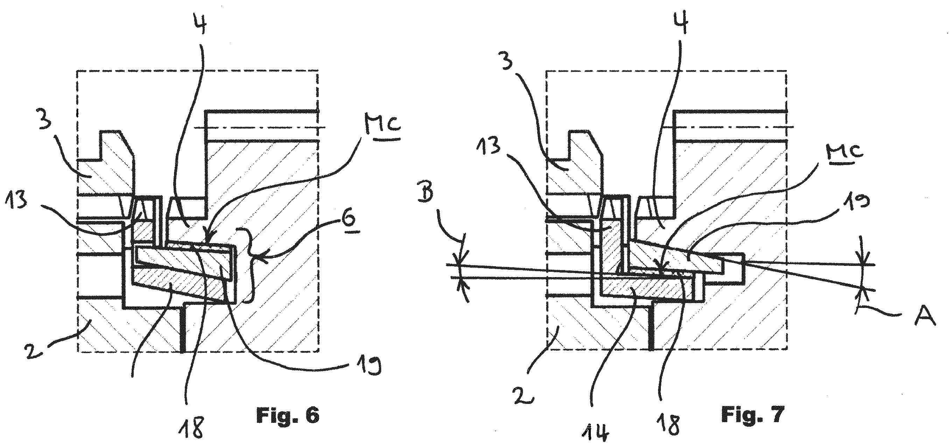

Figure 6 shows an embodiment of this type.

The synchronizer ring 6 embodies a blocker portion 13 and the pressure portion 27. The pressure portion 27 embodies a male cone. Different from the embodiments depicted before, this male cone of the pressure portion 27 does not serve for directly generating circumferential slide i. e. for directly generating frictional forces in circumferential direction.

Instead it is a pressure cone only as will be explained hereinafter.

This pressure cone of the pressure portion has a cone angle A of more than 6.5°.

In addition, the synchronizer ring 6 carries a friction ring 19. The inner circumferential surface of the friction ring 19 forms a female cone which corresponds to the pressure cone. The outer circumferential surface of the friction ring 19 forms a male cone that directly generates circumferential slide and the according frictional forces in circumferential direction. That means that the outer circumferential surface of the friction ring 13 forms the male cone MC here which effects as what has been named synchronizer portion 14 before.

The deciding point is that this male cone has a cone angle B less than 6.5°, most preferably the cone angle B is around 3.5°.

The friction ring 19 is locally slotted.

As soon as the pressure portion 27 is pressed into the female cone of the friction ring 19, the friction ring 19 expands in radial direction. That way the male cone of the friction ring 19 comes into intense contact with the female cone of the dog ring 4. Since the cone angle B of the male cone on the outside of the friction ring 19 is so small, a significantly increased frictional force in circumferential direction is generated between the friction ring 19 and the dog ring 4 as long as the friction ring 19 is sliding the dog ring along in circumferential direction.

After completion of the synchronization, when the synchronizer ring is pushed away from the dog ring, the male cone of the friction ring tends to stick and to remain in the female cone of the dog ring.

However, due to its bigger cone angle A, the pressure portion 27 and the male cone formed by it is pulled out of the female cone of the friction ring 19. As soon as this has happened, the friction ring 19 contracts again in radial direction. That way its male cone comes out of contact with the female cone of the dog ring 4, despite of the small cone angle B.

### SINGLE CONE TYPE SYNCHRONIZER WITH DECREASED CONE ANGLE AND ONE PART SYNCHRONIZER RING

This variant according to figure 6 can also be modified as shown by figure 7.

This variant shown by figure 7 works very similar to that one disclosed by means of figure 6. For that reason, the things explained before apply to this variant, too.

The difference between the variant shown by figure 6 and the variant shown by figure 7 is that the variant according to figure 7 uses a one part only synchronizer ring.

As depicted before in regard to the first embodiment, there is a one part synchronizer ring 6 that forms a blocker portion 13 and the synchronizer portion 14. In contrast to the first embodiment, the synchronizer portion 14 forms on its outer circumference a male cone with a small cone angle B, preferably less than 6.5°. The cone can be plated by means of a friction lining 18.

The deciding point is here that the synchronizer ring 6 does not directly contact the fixed portion of the dog ring.

Instead, the dog ring 6 now carries, movable relatively to the dog ring, a friction ring 19. The friction ring 19 is nested that way to the dog ring that it is made sure by means of a form fit that the friction ring 19 and the dog ring 4 always rotate synchronously.

This embodiment works as follows:
As soon as the synchronizer portion 14 with the male cone on its outside engages the friction ring 19, the slotted friction ring 19 will be compressed in radial direction. Next, the friction ring 19 is driven deeper into the female cone of the dog ring 4 while the synchronizer portion 14 of the synchronizer ring is driven deeper into the friction ring 19. That way an enormous friction is generated between the friction ring 19 and the synchronizer portion 14 due to the small cone angle B of the male cone on the outside of the synchronizer portion 14.

Despite the small cone angle B, a reliable loosening of the friction ring 19 and the synchronizer portion 14 can take place after completion of the synchronization when the synchronizer portion 14 is withdrawn.

By withdrawal of the synchronizer portion 14, the male cone on the outside of the friction ring 19 comes out of contact with the female cone of the dog ring 4. Not girded and compressed anymore by the female cone of the dog ring 4, the elastic friction ring 19 expands in radial direction. That way it is possible that the male cone of the synchronizer portion 14 can be drawn out of the female cone on the inner surface of the friction ring 19 now without being hindered by the small cone angle B in doing so.

### COMPLETE CONSTRUCTION WITH A SINGLE CONE TYPE SYNCHRONIZER WITH DECREASED CONE ANGLE AND TWO PART SYNCHRONIZER RING

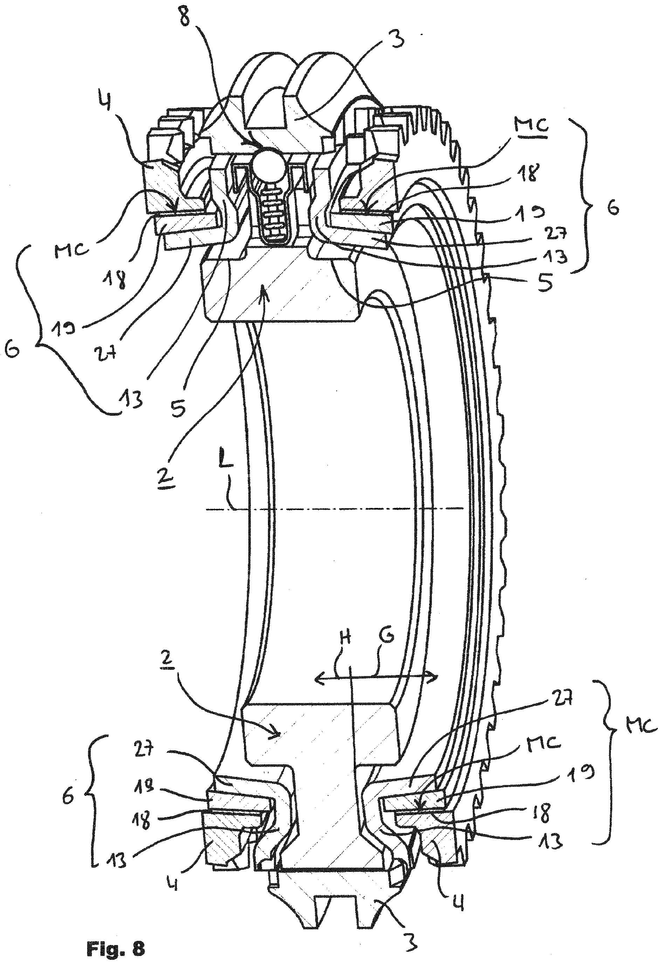

The preferred embodiment shown by Fig. 8 is a variant of the construction already disclosed by Fig. 1.

In so far all those things described for the embodiment according to Fig. 1 apply to the embodiment according to Fig. 8, too - unless the differences described hereinafter forbid this.

Similar to what is shown by Figure 6 a friction ring 19 is provided that forms together with the ring embodying the blocker portion 13 and the pressure portion 27 a two part synchronizer ring.

The outer circumferential surface of the friction ring 19 forms the inventive male cone MC with a cone angle B smaller than the cone angle A of the male cone of the pressure portion
29 of the synchronizer ring 14, as explained above in regard to Fig. 6. The outer circumferential surface of the friction ring 19 may carry a friction lining 18.

Once again no sliding in circumferential direction between the outer male cone of the pressure portion 27 and the friction ring 19 occurs. Here, again the male cone MC embodied by the outer circumferential surface of the friction ring 19 forms what is called "synchronizer portion" otherwise.

### LIST OF REFERENCE NUMBERS

- 1: blocking type synchronizer
- 2: synchronizer hub
- 3: synchronizer sleeve
- 4: dog ring
- 5: shoulder carved into the synchronizer hub
- 6: synchronizer ring
- 7: not assigned
- 8: strut
- 9: spring
- 10: strut housing
- 11: recess
- 12: annular cutout of the synchronizer hub
- 13: blocker portion
- 14: synchronizer portion
- 15: transition area
- 16: inner radial portion of the blocker portion
- 17: oblique portion of the blocker portion
- 18: friction linin
- 18a: outer friction layer
- 18b: inner friction layer
- 19: friction ring
- 29: base ring of a synchronizer ring
- 39: support ring
- 49: intermediate ring
- 59: base ring
- 69: support ring with an outer cone
- 79: intermediate ring
- 89: second synchronizer portion
- 99: pressure portion of the synchronizer ring
- 109: cone angle
- 1: cone angle
- L: rotational axis
- D: thickness of the synchronizer ring
- G: gear side
- H: hub side
- A: cone angle
- B: cone angle
- MCC: male coupler cone of the synchronizer portion
- MC: male cone of the synchronizer portion
- Spline: indication of the spline of the blocker portion 13

## Claims

1. Blocking type synchronizer (1) with a synchronizer hub (2) equipped with
an external toothing on which, by means of an according inner toothing, a synchronizer sleeve (3) is hold non-rotatably but slidably along the rotational axis (L), and
a synchronizer ring (6) which can be brought into positive engagement with the synchronizer sleeve (3), and
a dog ring (4) which can be brought, as soon as rotating with the same speed as the synchronizer sleeve (3), into positive engagement with the synchronizer sleeve (3),
wherein
the synchronizer ring (6) forms a synchronizer portion (14) which embodies a male cone (MC) surface for frictionally accelerating the dog ring (4) to synchronous speed, and that
the synchronizer ring (6) forms a blocker portion (13), too, with a blocker spline that cannot be passed by the teeth of the synchronizer sleeve (3) before the dog ring (4) and the synchronizer ring (6) have reached the synchronous speed,
wherein the predominant portion of the male cone surface of the synchronizer portion 14 extends in direction of the rotational axis L and is positioned inside the dog ring, seen in radial direction, wherein the average diameter of said male cone surface is smaller than the average diameter on which said blocker spline is arranged, wherein the synchronizer hub is equipped with an annular cutout for accommodating a predominant portion of the blocker portion,
wherein the axial length from the dog ring to another dog ring of the synchronizer is 32 mm or less,
**characterized in that**
directly neighboring to a transition area (15) being an area between the blocker portion (13) and a synchronizer portion (14), the blocker portion (13) is formed by an inner radial portion (16) that is oriented in a radial direction only,
wherein the blocker portion (13) is formed by an oblique portion (17),
wherein the oblique portion (17) is inclined away from the synchronizer hub (2) in direction toward the dog ring (4),
wherein the radial extension of the oblique portion (17) amounts to at least 30% of the radial extension of the complete blocker portion (13),
wherein the blocker portion (13) is formed by an outer radial portion (16a) that is oriented in a radial direction only,
wherein the male cone (MC) is positioned radially below the dog ring (4) and the blocker portion (13).

2. Blocking type synchronizer (1) according to claim 1, **characterized in that** said cone surfaces are located - seen in relation to the blocker spline - on the gear side (G) instead of the hub side (H).

3. Blocking type synchronizer (1) according to any one of the preceding claims, **characterized in that** the major portion of the said male cone surface is positioned inside the dog ring (4) .

4. Blocking type synchronizer (1) according to any one of the preceding claims, **characterized in that** a friction ring (18) is radially placed between the male cone surface of the synchronizer portion (14) and the dog ring (4), whereas the friction ring (18) is preferably equipped with one local slot and/or preferably made of carbon.

5. Blocking type synchronizer (1) according to claim 4, **characterized in that** the inner circumferential surface of the friction ring (18) forms a female cone surface to frictionally interact directly with the male taper surface of the synchronizer portion (14), whereas the outer circumferential surface of the friction ring (18) preferably forms a male cone surface to frictionally interact directly with the dog ring (4), said female cone surface of the friction ring (18) preferably having a cone angle bigger than the cone angle of the male cone surface of the friction ring (18).

6. Blocking type synchronizer (1) according to any one of the preceding claims, **characterized in that** the synchronizer ring (6) is made from a sheet metal forming a male cone surface that is free of a surface pattern revealing a milling or grinding operation of the male cone surface.

7. Method for manufacturing the blocking type synchronizer (1) according to one of the preceding claims, **characterized in that** the synchronizer ring (6) is made from an annular and flat sheet metal provided with a blocker spline by stamping and deep-drawn hereinafter into a ring with a first ring portion extending predominantly in radial direction, forming a blocker portion (13) and carrying the blocker spline and a second ring portion extending predominantly in axial direction and forming the synchronizer portion (14) with said male cone surface.

8. Transmission or gearbox with at least one blocking type synchronizer (1) according to any one claims 1-6.

9. Use of a sheet metal for manufacturing the synchronizer ring (6) of the blocking type synchronizer (1) of any of claims 1-6 by plastic transformation that embodies a blocker portion (13) with a blocker spline cut into it and integrally therewith and a synchronizer portion (14) with a male cone surface, wherein the average diameter of said male cone surface is smaller than the average diameter on which said blocker spline is arranged.

## Patentansprüche

1. Synchronisiereinrichtung vom Blockiertyp (1) mit einer Synchronnabe (2),
die mit einer Außenverzahnung ausgestattet ist, auf der mittels einer entsprechenden Innenverzahnung eine Synchronisierhülse (3) drehfest, aber entlang der Rotationsachse (L) verschiebbar gehalten ist, und
einem Synchronisierungsring (6), der in einen positiven Eingriff mit der Synchronisierhülse (3) gebracht werden kann, und
einem Schaltmuffenring (4), der, sobald er mit der Synchronisierhülse (3) die gleiche Drehzahl erreicht, in einen positiven Eingriff mit der Synchronisierhülse (3) gebracht werden kann, wobei
der Synchronisierungsring (6) einen Synchronisierungsteil (14) bildet, der eine männliche Kegeloberfläche (MC) für das reibungsbedingte Beschleunigen des Schaltmuffenrings (4) auf Synchronisationsgeschwindigkeit umfasst, und
dass der Synchronisierungsring (6) auch einen Blockierteil (13) bildet, mit einem Blockierprofil, das von den Zähnen der Synchronisierhülse (3) nicht überwunden werden kann, bevor der Schaltmuffenring (4) und der Synchronisierungsring (6) die Synchronisationsgeschwindigkeit erreicht haben,
wobei der überwiegende Teil der männlichen Kegeloberfläche des Synchronisierungsteils 14 sich in Richtung der Rotationsachse L erstreckt und in radialer Richtung innerhalb des Schaltmuffenrings positioniert ist, wobei der mittlere Durchmesser dieser männlichen Kegeloberfläche kleiner ist als der mittlere Durchmesser, auf dem das Blockierprofil angeordnet ist, wobei die Synchronisierhülse mit einer ringförmigen Ausnehmung ausgestattet ist, um einen überwiegenden Teil des Blockierteils aufzunehmen, wobei die axiale Länge von einem Schaltmuffenring zu einem anderen Schaltmuffenring der Synchronisierhülse 32 mm oder weniger beträgt,
**dadurch gekennzeichnet, dass** direkt benachbart zu einem Übergangsbereich (15),
der ein Bereich zwischen dem Blockierteil (13) und dem Synchronisierungsteil (14) ist und das Blockierteil (13) durch einen inneren radialen Abschnitt (16) gebildet wird, der nur in radialer Richtung orientiert ist,
wobei der Blockierteil (13) durch einen schrägen Abschnitt (17) gebildet wird, wobei der schräge Abschnitt (17) von der Synchronnabe (2) in Richtung des Schaltmuffenrings (4) weg geneigt ist,
wobei die radiale Ausdehnung des schrägen Abschnitts (17) mindestens 30 % der radialen Ausdehnung des gesamten Blockierteils (13) beträgt,
wobei der Blockierteil (13) durch einen äußeren radialen Abschnitt (16a) gebildet wird, der nur in radialer Richtung orientiert ist,
wobei der männliche Kegel (MC) radial unterhalb des Schaltmuffenrings (4) und des Blockierteils (13) positioniert ist.

2. Synchronisiereinrichtung vom Blockiertyp (1) nach Anspruch 1, **dadurch gekennzeichnet, dass** die genannten Kegeloberflächen - in Bezug auf das Blockierprofil gesehen - auf der Getriebeseite (G) anstelle der Naben-Seite (H) liegen.

3. Synchronisiereinrichtung vom Blockiertyp (1) nach einem der vorhergehenden Ansprüche, **dadurch gekennzeichnet, dass** der Hauptteil der genannten männlichen Kegeloberfläche innerhalb des Schaltmuffenrings (4) positioniert ist.

4. Synchronisiereinrichtung vom Blockiertyp (1) nach einem der vorhergehenden Ansprüche, **dadurch gekennzeichnet, dass** ein Reibungsring (18) radial zwischen der männlichen Kegeloberfläche des Synchronisierungsteils (14) und dem Schaltmuffenring (4) angeordnet ist, wobei der Reibungsring (18) vorzugsweise mit einem lokalen Schlitz ausgestattet ist und/oder vorzugsweise aus Kohlenstoff hergestellt ist.

5. Synchronisiereinrichtung vom Blockiertyp (1) nach Anspruch 4, **dadurch gekennzeichnet, dass** die innere Umfangsfläche des Reibungsrings (18) eine weibliche Kegeloberfläche bildet, um reibschlüssig direkt mit der männlichen Kegeloberfläche des Synchronisierungsteils (14) zu interagieren, wobei die äußere Umfangsfläche des Reibungsrings (18) vorzugsweise eine männliche Kegeloberfläche bildet, um reibschlüssig direkt mit dem Schaltmuffenring (4) zu interagieren, wobei die weibliche Kegeloberfläche des Reibungsrings (18) vorzugsweise einen größeren Kegelwinkel aufweist als die männliche Kegeloberfläche des Reibungsrings (18).

6. Synchronisiereinrichtung vom Blockiertyp (1) nach einem der vorhergehenden Ansprüche, **dadurch gekennzeichnet, dass** der Synchronisierungsring (6) aus einem Blech hergestellt ist, das eine männliche Kegeloberfläche bildet, die frei von einer Oberflächenstruktur ist, die eine Fräs- oder Schleifbearbeitung der männlichen Kegeloberfläche erkennen lässt.

7. Verfahren zur Herstellung der Synchronisiereinrichtung vom Blockiertyp (1) nach einem der vorhergehenden Ansprüche, **dadurch gekennzeichnet, dass** der Synchronisierungsring (6) aus einem ringförmigen und flachen Blech hergestellt wird, das mit einem Blockierprofil durch Stanzen versehen wird und danach tiefgezogen wird, um einen Ring mit einem ersten Ringabschnitt zu bilden, der überwiegend in radialer Richtung verläuft, einen Blockierteil (13) bildet und das Blockierprofil trägt, und einen zweiten Ringabschnitt, der überwiegend in axialer Richtung verläuft und das Synchronisierungsteil (14) mit der genannten männlichen Kegeloberfläche bildet.

8. Getriebe oder Schaltgetriebe mit mindestens einer Synchronisiereinrichtung vom Blockiertyp (1) nach einem der Ansprüche 1-6.

9. Verwendung eines Blechs zur Herstellung des Synchronisierungsrings (6) der Synchronisiereinrichtung vom Blockiertyp (1) nach einem der Ansprüche 1-6 durch plastische Umformung, wobei ein Blockierteil (13) mit einem hineingeschnittenen Blockierprofil und integraler Verbindung damit und ein Synchronisierungsteil (14) mit einer männlichen Kegeloberfläche gebildet wird, wobei der mittlere Durchmesser dieser männlichen Kegeloberfläche kleiner ist als der mittlere Durchmesser auf dem besagtes Blockierprofil angeordnet ist.

## Revendications

1. Synchroniseur du type à blocage (1) avec un moyeu de synchroniseur (2) équipé
d'une denture extérieure sur laquelle, par une denture intérieure correspondante, un manchon de synchroniseur (3) est maintenu de manière non rotative mais coulissable le long de l'axe de rotation (L), et
un anneau de synchronisation (6) qui peut être mis en prise avec le manchon de synchroniseur (3), et
une bague de commande (4) qui peut être mise en prise avec le manchon de synchroniseur (3) dès qu'elle tourne à la même vitesse que le manchon de synchroniseur (3),
où l'anneau de synchronisation (6) forme une portion synchronisatrice (14) qui comporte une surface de cône mâle (MC) pour accélérer par friction la bague de commande (4) à la vitesse synchrone, et que
l'anneau de synchronisation (6) forme également une portion de blocage (13), avec un profil de blocage qui ne peut pas être franchi par les dents du manchon de synchroniseur (3) avant que la bague de commande (4) et l'anneau de synchronisation (6) n'aient atteint la vitesse synchrone,
où la portion principale de la surface du cône mâle de la portion synchronisatrice (14) s'étend dans la direction de l'axe de rotation L et est positionnée à l'intérieur de la bague de commande, vue en direction radiale, où le diamètre moyen de ladite surface du cône mâle est inférieur au diamètre moyen sur lequel le profil de blocage est agencé, où le moyeu de synchroniseur est équipé d'une découpe annulaire pour loger une portion principale de la portion de blocage, où la longueur axiale de la bague de commande à une autre bague de commande du synchroniseur est de 32 mm ou moins,
**caractérisé en ce qu'**une zone de transition (15) directement adjacente,
qui est une zone entre la portion de blocage (13) et une portion synchronisatrice (14), la portion de blocage (13) est formée par une portion radiale intérieure (16) qui est orientée uniquement dans une direction radiale,
où la portion de blocage (13) est formée par une portion oblique (17),
où la portion oblique (17) est inclinée à l'écart du moyeu de synchroniseur (2) en direction de la bague de commande (4),
où l'extension radiale de la portion oblique (17) représente au moins 30 % de l'extension radiale de l'ensemble de la portion de blocage (13),
où la portion de blocage (13) est formée par une portion radiale extérieure (16a) orientée uniquement dans une direction radiale,
où le cône mâle (MC) est positionné radialement en dessous de la bague de commande (4) et de la portion de blocage (13).

2. Synchroniseur du type à blocage (1) selon la revendication 1, **caractérisé en ce que** lesdites surfaces coniques sont situées - en relation avec le profil de blocage - du côté de l'engrenage (G) au lieu du côté du moyeu (H).

3. Synchroniseur du type à blocage (1) selon l'une des revendications précédentes, **caractérisé en ce que** la majeure partie de ladite surface du cône mâle est positionnée à l'intérieur de la bague de commande (4).

4. Synchroniseur du type à blocage (1) selon l'une des revendications précédentes, **caractérisé en ce qu'**un anneau de friction (18) est placé radialement entre la surface du cône mâle de la portion synchronisatrice (14) et la bague de commande (4), tandis que l'anneau de friction (18) est de préférence équipé d'une fente locale et/ou fabriqué de préférence en carbone.

5. Synchroniseur du type à blocage (1) selon la revendication 4, **caractérisé en ce que** la surface circonférentielle intérieure de l'anneau de friction (18) forme une surface conique femelle pour interagir par friction directement avec la surface conique mâle de la portion synchronisatrice (14), tandis que la surface circonférentielle extérieure de l'anneau de friction (18) forme de préférence une surface conique mâle pour interagir par friction directement avec la bague de commande (4), ladite surface conique femelle de l'anneau de friction (18) ayant de préférence un angle conique plus grand que l'angle conique de la surface conique mâle de l'anneau de friction (18).

6. Synchroniseur du type à blocage (1) selon l'une des revendications précédentes, **caractérisé en ce que** l'anneau de synchronisation (6) est fabriqué à partir d'une tôle formant une surface conique mâle exempte de motif de surface révélant une opération de fraisage ou de meulage de la surface conique mâle.

7. Procédé de fabrication du synchroniseur du type à blocage (1) selon l'une des revendications précédentes, **caractérisé en ce que** l'anneau de synchronisation (6) est fabriqué à partir d'une tôle annulaire et plate, dotée d'un profil de blocage par estampage, puis emboutie en un anneau avec une première portion annulaire s'étendant principalement dans une direction radiale, formant une portion de blocage (13) et portant le profil de blocage, et une seconde portion annulaire s'étendant principalement dans une direction axiale et formant la portion synchronisatrice (14) avec ladite surface de cône mâle.

8. Transmission ou boîte de vitesses avec au moins un synchroniseur du type à blocage (1) selon l'une des revendications 1-6.

9. Utilisation d'une tôle pour la fabrication de l'anneau de synchronisation (6) du synchroniseur du type à blocage (1) selon l'une des revendications 1-6 par transformation plastique qui forme une portion de blocage (13) avec un profil de blocage découpé et intégré à celui-ci et une portion synchronisatrice (14) avec une surface de cône mâle, où le diamètre moyen de ladite surface de cône mâle est inférieur au diamètre moyen sur lequel le profil de blocage est agencé.
